Europäisches Patentamt

European Patent Office

Office européen des brevets

(11) Publication number: **0 196 611**
**B1**

(12) **EUROPEAN PATENT SPECIFICATION**

(45) Date of publication of patent specification: **05.09.90**

(51) Int. Cl.⁵: **G 21 C 19/30**

(21) Application number: **86104124.2**

(22) Date of filing: **25.03.86**

(54) Debris-retaining trap for a fuel assembly.

(30) Priority: **04.04.85 US 720109**

(43) Date of publication of application:
**08.10.86 Bulletin 86/41**

(45) Publication of the grant of the patent:
**05.09.90 Bulletin 90/36**

(84) Designated Contracting States:
**BE DE FR GB IT SE**

(56) References cited:
**EP-A-0 184 219**
**DE-A-2 517 479**
**FR-A- 847 278**
**FR-A-1 169 479**
**NL-C- 43 604**

(73) Proprietor: **WESTINGHOUSE ELECTRIC
CORPORATION
Westinghouse Building Gateway Center
Pittsburgh Pennsylvania 15222 (US)**

(72) Inventor: **Rylatt, John Anthony
2363 Haymaker Road
Monroeville Pennsylvania 15146 (US)**

(74) Representative: **Patentanwälte Dipl.-Ing. R.
Holzer Dipl.-Ing. (FH) W. Gallo
Ludwigstrasse 26
D-8900 Augsburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates generally to nuclear reactors and, more particularly, to a trap mounted in the bottom nozzle of a fuel assembly for capturing and retaining debris left in the reactor after assembly, repair and/or replacement operations.

During manufacture and subsequent installation and repair of components comprising a nuclear reactor coolant circulation system, diligent effort is made to help assure removal of all debris from the reactor vessel and its associated systems which circulate coolant therethrough under various operating conditions. Although elaborate procedures are carried out to help assure debris removal, experience shows that in spite of the safeguards used to effect such removal, some chips and metal particles still remain hidden in the systems.

In particular, fuel assembly damage due to debris trapped at the bottom grid has been noted in several reactors in recent years. The damage consists of fuel rod tube perforations caused by fretting of debris in contact with the exterior of the tube. The debris tends to be relatively thin rectangular pieces, as opposed to pieces which are spherical in shape. Specifically, most of the debris consists of metal turnings which were probably left in the primary system after steam generator repair or replacement. The debris lodges in the region of the lowermost grid within the spaces between its "egg-crate" shaped cell walls and the lower end portions of the fuel rod tubes. Almost all of the debris is deposited just above the four coolant flow openings in the lower core support plate.

US-A-4 096 032 discloses a filter which comprises a plate having an opening therethrough, and a screen element secured to the plate and spanning its opening. The screen element consists of a filter screen for catching debris, and a backing screen which is made of heavier wire and has larger openings than the filter screen and is placed against the latter in direct backing relationship therewith so as to mechanically support it. This known filter is intended for use in removing debris only during tests performed to verify the functional and structural adequacy of the primary cooling system of a nuclear reactor; after such testing, and before the fuel assemblies are loaded into the reactor, the filter is removed because the pressure loss produced by its superposed filter and backing screens, and the latter's susceptibility of clogging during extended use, would be unacceptable for normal operation of the reactor.

Older EP-A1-0 184 219 discloses a debris trap for capturing and retaining debris entrained in liquid coolant flowing into a nuclear fuel assembly through flow holes in an adapter plate of an end nozzle of the fuel assembly wherein said debris trap comprises a hollow enclosure disposed adjacent said adapter plate opstream thereof and formed of a material which is permeable to the liquid coolant and impermeable to debris entrained therein. Said hollow enclosure has a pair of walls which extend across the path of coolant flow and are spaced from each other in the flow direction. Said walls are interconnected at their periphery to define a debris capturing and retaining chamber within the enclosure. The upstream wall of said enclosure has an opening being sufficiently large to permit debris entrained in the liquid coolant to enter said capturing and retaining chamber.

It is the object of the present invention to provide an improved approach to the problem of debris removal, one which is compatible with the existing structure and operation of the components of the reactor and is effective throughout the operating cycle of the reactor and provides overall benefits which at least outweigh the costs it adds to the reactor.

The invention accordingly resides in a debris trap as defined in claim 1.

In a preferred embodiment, the debris retaining means comprises an annular bell-mouthed ring attached to the upstream wall of the enclosure and encompassing the inlet opening therein. The ring has an outer generally vertical annular wall and an inner generally outwardly and upwardly curved annular wall which merges with the outer wall at the respective upper edges thereof. The flow distributing means comprises a generally outwardly and upwardly flared annular diffuser ring having opposite bottom and top edges with respective diameters less and greater than that of the opening, whereby some portions of coolant coming into the chamber through the opening can flow upwardly and outside of the diffuser ring, while other portions of coolant can flow upwardly through the diffuser ring. Also, the hollow enclosure includes at least one corner piece located adjacent the opening in the lower wall thereof, the diffuser ring being attached to the corner piece so as to overlie the bell-mouthed ring and opening in the aligned relationship therewith. Further, the corner piece has a bendable tab formed thereon for releasably locking the hollow enclosure in place within the end nozzle.

In an alternative embodiment, the debris retaining means includes an annular cylindrical ring attached to the upstream wall of the enclosure and encompassing the inlet opening therein so as to form a lip about the opening. The flow distributing means comprises an inverted cone attached to the downstream wall of the hollow enclosure. Preferably, the maximum diameter of the cone is less than that of the inlet opening.

The debris trap embodying the invention is designed to fit the bottom nozzle of presently existing fuel assemblies without modification thereof. The trap is adapted to be positioned between the adapter plate of the bottom nozzle and the upper surface of the lower core support plate such that inlet openings of the trap which preferably correspond in number and relative positions to the coolant flow openings in the lower core plate are aligned with the core plate openings. Whilst the debris trap will retain the debris until the debris-laden trap can be removed during a subsequent refueling operation, the pressure drop across the trap while the latter is in use will be held to a minimum.

The preferred embodiments of the invention will now be described, by way of example only, with reference to the accompanying drawings, in which:

Figure 1 is an elevational view of a fuel assembly embodying the invention, the assembly being shown partly in section and in vertically foreshortened form;

Fig. 2 is an enlarged top plan view of the preferred embodiment of the debris trap, as seen along line 2-2 of Fig. 1;

Fig. 3 is a fragmentary view of a portion of the debris trap, as taken along line 3-3 of Fig. 2;

Fig. 4 is a fragmentary view of another portion of the debris trap, as seen along line 4-4 of Fig. 2;

Fig. 5 is a top plan view of an alternative embodiment of the debris trap, illustrating only portions of the upper and lower walls of the debris trap together with flow diffuser cones and debris retainer lips; and

Fig. 6 is an elevational view partly in section, as taken along line 6-6 of Fig. 5;

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

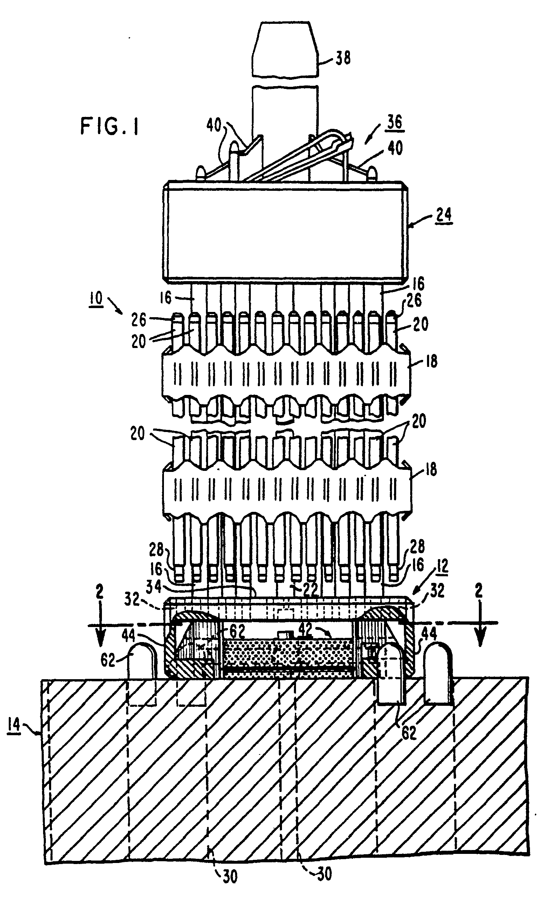

Referring now to the drawings, and particularly to Fig. 1, the fuel assembly shown therein and generally designed with numeral 10 is the type used in pressurized water reactors. Basically, it comprises a lower end structure or bottom nozzle 12 for supporting the assembly on a lower core support plate 14 in the core region of a reactor (not shown), control rod guide thimbles 16, transverse grids 18 axially spaced along the guide thimbles 16, an organized array of elongate fuel rods 20 transversely spaced and supported by the grids 18, an instrumentation tube 22, and an upper end structure or top nozzle 24 attached to the upper ends of the guide thimbles 16. The fuel assembly 10 forms an integral unit capable of being conventionally handled without damage to the assembly parts.

Each of the fuel rods 20 contains nuclear fuel pellets (not shown) and has its opposite ends sealed by means of end plugs 26, 28. When in use, a liquid moderator/coolant such as water, or water containing boron, is pumped upwardly through flow openings 30 in the lower core plate 14, through flow holes 32 in the adapter plate 34 of the bottom nozzle 12, through the guide thimbles 16 and along the fuel rods 20 of the fuel assembly, and out through flow passages (not shown) in the top nozzle 24.

The fission process is controlled by means of control rods (not shown) which are reciprocally movable in the guide thimbles 16 by means of a rod cluster control mechanism 36 having an internally threaded cylindrical tube 38 with radially extending flukes 40 from which the control rods are supported, all as well known in the art.

As mentioned above, fuel assembly damage can occur due to debris trapped at the lowermost one of the grids 18. Therefore, it is highly desirable to trap such debris before it reaches the lowermost grid 18.

For this purpose, the invention provides a debris-retaining trap, generally designated with numeral 42, which is mounted within the bottom nozzle 12 adjacent to and upstream, i.e., below, its upper central adapter plate 34 and between its corner legs 44, as illustrated in Fig. 1. The trap 42 is positioned across the path of coolant flow from the lower core plate openings 30 to the adapter plate holes 32 so as to capture debris, such as small parts or pieces, from the flowing coolant and thereby prevent it from entering the fuel assembly 10. The debris is retained within the trap 42, to be removed therewith and with the fuel assembly 10 at the next refueling operation.

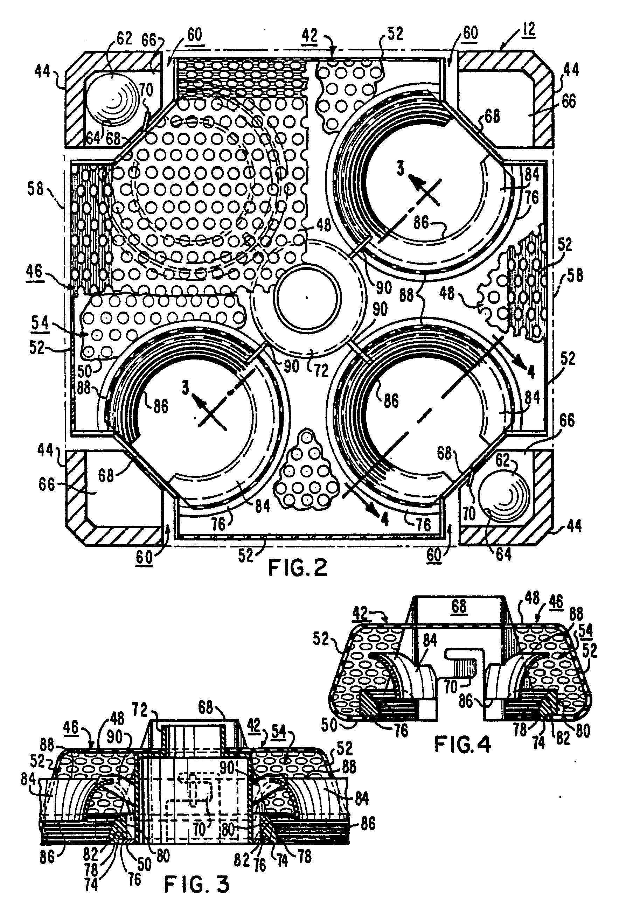

Turning now to Figs. 2 to 4, there is illustrated a preferred embodiment of the debris trap 42 which includes a hollow enclosure 46 having upper (downstream) and lower (upstream) walls 48, 50 and several side walls 52, preferably four in number, which interconnect the upper and lower walls at their respective peripheries and space them apart so as to define a debris capturing and retaining chamber, generally designated 54, within the enclosure 46. The side walls 52 angle upwardly and inwardly from the lower wall 50 to the upper wall 48 so as to provide increased coolant flow through the enclosure 46. The walls 48, 50, 52 of the hollow enclosure 46 are composed of any suitable material to be permeable to the liquid coolant but impermeable to debris carried by the coolant. For instance, as illustrated, the walls can be composed of perforated sheet plate material; however, they may just as readily been composed of a wire mesh screen or layer material or a combination of the perforated sheet and wire mesh screen materials. For example, the bottom wall 50 could be made from perforated sheet material, while the remaining walls 48, 52 are made of wire mesh sheet material.

As seen from Figs. 1 and 2, the debris trap enclosure 46 has overall cross-sectional dimensions such that the enclosure fits within the peripheral skirt 58 of the bottom nozzle 12 between the corner legs 44 thereof and extends generally coplanar with the adapter plate 34 of the nozzle. In the corners of the enclosure 46, recesses 60 are formed to accommodate the corner legs 44 and two alignment pins 62 which extend from the lower core plate 14 through openings 64 in flanges 66 of one diagonal pair of the corner legs 44. At each recess 60 formed by the enclosure 46 of a corner thereof, a corner piece 68 connects the side walls 52 with one another. Although only shown with two of the corner pieces 68, each of them has a locking means in the form of a bendable tab 70 disposed to engage the flanges 66 of the bottom nozzle 12 upon installation of the trap 42. Preferably, in the installed position of the trap 42, the upper wall 48 of its enclosure 46 is spaced a short distance below the adapter plate 34 so that water flow through the holes 32 of the adapter plate is not obstructed.

The trap 42 is installed from the bottom of the fuel assembly 10 after the assembly has been removed from the reactor core. After the trap 42 is installed in the fuel assembly 10, the tabs 70 are bent outwardly over the flanges 66 in order for the trap to lock in place. To remove the trap 42, a wedge is inserted between each corner piece 68 and the flange 66 to force the tab 70 inward sufficiently to permit withdrawal of the trap 42.

The hollow enclosure 46 of the debris trap 42 also has a central sleeve 72 mounted between the upper and lower walls 48, 50 and resting upon the lower core plate 14. This sleeve 72 serves to lend strength to the hollow enclosure 46, and it affords easy access to the lower end of the instrumentation tube 22 where the latter is attached to the bottom nozzle adapter plate 34.

The debris trap 42 shown in Figs. 2 to 4, also has a plurality of inlet openings 74 leading into the chamber 54 of the enclosure 46 through its lower or upstream wall 50. The openings 74 are matched in number and alignment with the coolant flow openings 30 in the lower core plate 14 so that debris entrained in the liquid coolant flowing from the core plate openings 30 will enter the chamber 54 of the enclosure 46 through the openings 74.

The trap 42 includes further debris-retaining means in the form of bell-mouthed rings 76 disposed within the chamber 54 and encompassing the respective openings 74. Each ring 76 has a lower flange 78 which fits snugly into one of the openings 74 when the ring is seated on and attached to the inner side of the upstream wall 50, and an outer generally vertical annular wall 80 which prevents debris carried by coolant into said chamber through the opening 74 and the ring 76 from existing again through the opening 74. The ring 76 also has an inlet generally outwardly and upwardly curved annular wall 82 which merges with the outer wall 80 at the respective upper edges thereof.

Finally, the debris trap 42 includes flow distributing means in the form of generally outwardly and upwardly flared annular diffuser rings 84 located within the enclosure chamber 54 and extending generally downstream of and in alignment with the respective inlet openings 74 and bell-mouthed rings 76. Each of the diffuser rings 84 has upstream and downstream edges 86, 88 with diameters which are smaller and greater, respectively, than the minimum diameter of the associated bell-mouthed ring 76. The curvature of the diffuser ring 84 is similar to that of the inner wall 82 of the debris-retaining ring 76. The configuration of and spaced relationship between these lower (upstream) and upper (downstream) rings 76, 84 allows some of the coolant entering the chamber 54 through the lower ring 76 and the opening 74 to flow upwardly outside the diffuser ring 84 and through the space between the diffuser ring 84 and the bell-mouthed ring 76, while allowing the remainder of the coolant to flow directly through the diffuser ring 84. In this manner, the rings 76, 84 coact to proportionately distribute and guide the incoming coolant in a manner assuring a substantially uniform distribution of coolant flow across the bottom nozzle 12. Since this flow distribution is effected by the rings acting as vane-type flow guides, turning losses are minimal.

Each of the diffuser rings 84 is supported at its opposite inner and outer sides by one of the corner pieces 68 located adjacent one of the openings 74 in the lower wall 50 and by a radial bracket 90 connected to and extending from the central sleeve 72. Thus, the diffuser rings 84 extend laterally between the respective corner pieces 68 and the central sleeve 72 in axial alignment with the associated openings 74 and lower rings 76.

Generally speaking, then, debris is retained within the trap 42 by the lower or upstream ring 76 which acts as a lip on the opening 74. However, some debris entrained in coolant flowing directly through the upper or downstream ring 84 is held up against the upper or downstream wall 48 and may fall back through the opening 74 at reduced flow conditions, such as exist during shutdown of the main coolant pumps. Even if this happens, the debris thus escaping from the trap will not get into the fuel assembly but will be flushed back into the trap 42 at the next reactor start-up. In the unlikely event that a trap in one of the fuel assemblies becomes partially blocked so as to reduce coolant flow-through, the arrangement embodying the invention allows a free interchange of coolant cross-flow under the bottom nozzle 12 from the adjacent fuel assemblies to compensate for the localized reduction in flow-through.

Summing up, the debris trap 42 embodying the invention offers the following advantages over previous designs. First, it produces a pressure reduced by a factor of at least three. Second, the addition of the flow distribution features reduces the pressure loss across the bottom nozzle. Third, mixing turbulence above the bottom nozzle is reduced significantly by the improved flow distribution under the bottom nozzle, which reduces the pressure losses occurring up to and at the first grid. Fourth, partial blockage of a given trap is offset by cross-flow, under the bottom nozzle, of coolant from adjacent fuel assemblies. And, fifth, the combination of improvements creates a distinct possibility of near-zero loss resulting from insertion of the trap. This is particularly desirable where not all fuel assemblies within the reactor core are fitted with a trap, and allows for the planned introduction of such trap into an existing operating reactor.

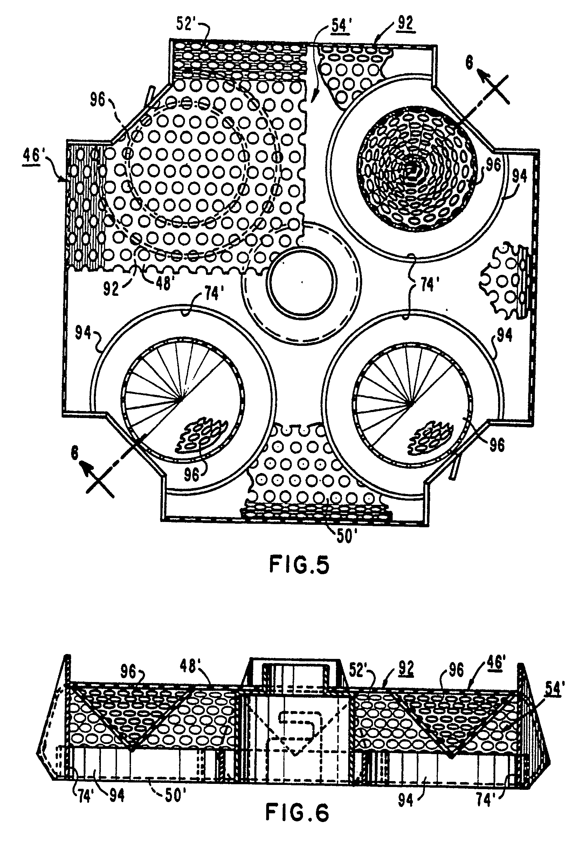

An alternative embodiment of the invention is illustrated in Figs. 5 and 6, showing a debris trap 92 which is similar to the one just described with reference to Figs. 1 to 4, except in two respects.

First, the debris-retaining means of the trap 92 take the form of cylindrical rings 94 which are attached to the lower or upstream wall 50' and surround the respective inlet openings 74' for the chamber 54'. Each of the cylindrical rings 94 has a configuration providing a lip about the associated opening 74' which serves to prevent debris carried by coolant into the chamber 54' from exiting again through the opening 74. Second, the flow distributing means are in the form of inverted cones 96 which are spaced downstream from and aligned with the respectively cylindrical rings 94 and openings 74' and are attached to the upper or downstream wall 48' of the hollow enclosure 46'. The particular configuration of each inverted cone 96 also results in a substantially uniform distribution of the coolant from the chamber 54' across the bottom nozzle 12. Each inverted cone 96 has a maximum diameter less than the diameter of the associated opening 74', and is composed of the same material as the enclosure 46'. While this design is somewhat simpler than the one of the preferred embodiment previously described herein, it is likely to produce a somewhat larger, though not necessarily unacceptable, pressure drop.

## Claims

1. A debris trap for capturing and retaining debris entrained in liquid coolant flowing into a nuclear fuel assembly through flow holes in an adapter plate of an end nozzle of the fuel assembly, the latter including a fuel-rod supporting grid spaced from said end nozzle downstream thereof, having regard, to the flow direction of said liquid coolant, said debris trap, comprising:

(a) hollow enclosure (46; 46') disposed adjacent said adapter plate (34) upstream thereof and formed of a material which is permeable to the liquid coolant and impermeable to debris entrained therein, said hollow enclosure having a pair of walls (48, 50; 48', 50') which extend across the path of coolant flow and are spaced from each other in said flow direction, and which walls are interconnected at their peripheries to define a debris capturing and retaining chamber (54; 54') within the enclosure;

(b) means defining at least one opening (74; 74') into the chamber (54; 54' through the wall of the enclosure which is the upstream wall (50; 50') thereof, said opening (74; 74') being sufficiently large to permit debris entrained in the liquid coolant to enter said chamber (54; 54,).

(c) debris retaining means (76; 94) disposed, within said chamber (54; 54'), round said opening (74; 74') and having a configuration such as to prevent debris carried by the liquid coolant into the chamber from exiting same through said opening (74; 74'); and

(d) flow distributing means (84; 96) extending, within said chamber (54; 54'), in spaced relationship with, and downstream of, said debris retaining means (76; 94) and said opening (74; 74') and having a configuration such as to cause the liquid coolant upon exiting said enclosure (46; 46') to be distributed across said adapter plate (34) substantially uniformly.

2. A debris trap according to claim 1, characterized in thatsaid material forming the hollow enclosure (46) is perforated plate material.

3. A debris trap according to claim 1 or 2, characterized in that said downstream and upstream walls (48, 50) of the hollow enclosure (46) have mounted therebetween a reinforcing central sleeve (72).

4. A debris trap according to claim 1, 2 or 3, characterized in that said hollow enclosure (46, 46') has a cross-sectional dimension such as to fit within said end nozzle (12), and includes locking means (70) for releasably locking the enclosure in position within the end nozzle.

5. A debris trap according to claim 4, characterized in that said locking means (70) comprises a pair of bendable tabs (70) disposed on opposite sides of said enclosure (46, 46') and engageable with said end nozzle (12) upon installation of the enclosure (46, 46') therein, to releasably lock the enclosure in position.

6. A debris trap according to any one of the preceding claims, characterized in that each of said debris retaining means comprises a bell-mouthed ring (76) attached to the upstream wall (50) of the enclosure (46) and extending round said opening (74) therein.

7. A debris trap according to claim 6, characterized in that said bell-mouthed ring (76) has an outer peripheral surface (80) which is substantially cylindrical, and an inner peripheral surface (82) which curves outwardly in said flow direction to merge with said outer peripheral surface (80) at the downstream end thereof.

8. A debris trap according to any one of the preceding claims, characterized in that said flow distributing means comprises an annular diffuser ring (84) spaced downstream of said opening (74) and flaring outwardly in said flow direction, said diffuser ring (84) being substantially in axial alignment with said opening (74) and, at its upstream end, having a diameter smaller than the diameter of the opening (74).

9. A debris trap according to claim 8, characterized in that said hollow enclosure (46) includes at least one corner piece (68) located adjacent said opening (74) and having said diffuser ring (84) attached thereto.

10. A debris trap according to any one of claims 1 to 5, characterized in that said debris retaining means comprises a cylindrical ring (94) attached to said upstream wall (50') round said opening (74') and forming a lip around the latter.

11. A debris trap according to claim 10, characterized in that said flow distributing means includes an inverted cone (96) attached to the downstream wall (48') of said hollow enclosure (46') opposite said opening (74') in the upstream wall (50') thereof.

12. A debris trap according to claim 11, characterized in that said cone (96) has a maximum diameter less than the diameter of said opening (74').

13. A debris trap according to claim 10 or 11, characterized in that said cone (96) is composed of the same material as said enclosure (46').

14. A debris trap according to any one of the preceding claims, characterized in that said walls (48, 50; 48', 50') of the hollow enclosure (46; 46') are interconnected at their peripheries by a side wall (52; 52') which in said flow direction is angled inwards.

**Patentansprüche**

1. Teilchenabscheider zum Einfangen und Zückhalten von Teilchen, die im flüssigen Kühlmittel mitgenommen werden, das durch Durchtrittsöffnungen in einer Adapterplatte eines Brenelementendstückes in ein Kernbrennelement einströmt, das mit Bezug auf die Strömungsrichtung des flüssigen Kühlmittels stromab des Endstückes mit Abstand davon ein Brennstabhaltegitter ausweist, wobei der Teilchenabscheider aufweist:

a) einen Hohlkasten (46, 46'), der stromauf angrenzend an die Adapterplatte (34) angeordnet und aus einem Material hergestellt ist, das für das flüssige Kühlmittel durchlässig und für die darin mitgenommenen Teilchen undurchlässig ist, und der zwei Wände (48, 50; 48', 50') aufweist, die quer zum Strömungsweg des Kühlmittels verlaufen und mit bezüglich der Strömungsrichtung gegenseitigem Abstand angeordnet sind sowie an ihren Rändern derart miteinander verbunden sind, daß innerhalb des Kastens eine Teilcheneinfang- und -rückhaltekammer (54, 54') gebildet ist,

b) Mittel, die mindestens eine öffnung (74, 74') durch die stromaufwärtige Wand (50, 50') des Kastens in die Kammer (54, 54') hinein bilden, wobei die öffnung (74, 74') ausreichend groß ist, daß in dem flissigen Kühlmittel mitgeführte Teilchen in die Kammer (54, 54') eintreten können,

c) Teilchenrückhaltemittel (76; 94), die in der Kammer (54, 54') um die öffnung (74, 74') herum angeordnet sind und eine solche Konfigration haben, daß die von dem flüssigem Kühlmittel in die Kammer hineingeführten Teilchen an einem Wiederaustritt drch die öffnung (74, 74') gehindert werden, und

d) Strömungsverteilungsmittel (84, 96), die in der Kammer mit Abstand von den Teilchenrückhaltemitteln (76,94) und der öffnung (74, 74') und stromab davon verlaufen und eine solche Konfiguration haben, daß das flussige Kühlmittel beim Austritt aus dem Kasten (46, 46') im wesentlichen gleichförmig über der Adapterpatte (34) verteilt wird.

2. Teilchenabscheider nach Anspruch 1, dadurch gekennzeichnet, daß das den Hohlkasten bildende Material (46) perforiertes Plattenmaterial ist.

3. Teilchenabscheider nach Anspruch 1 oder 2, dadurch gekennzeichnet, daß zwischen den stromaufwärtigen und den stromabwärtigen Wänden (48, 50) des Hohlkastens (46) eine mittige Verstärkungshülse (72) angeordnet ist.

4. Teilchenabscheider nach Anspruch 1, 2 oder 3, dadurch gekennzeichnet, daß der Holkasten (46, 46') eine solche Querschnittsabmessung hat, daß er in das Endstück (12) hineinpaßt, und daß er Arretierungsmittel (70) zum lösbaren Arretieren des Kastens in seiner Position innerhalb des Endstückes aufweist.

5. Teilchenabscheider nach Anspruch 4, dadurch gekennzeichnet, daß die Arretierungsmittel (70) zwei biegbare Laschen (70) aufweisen, die an gegenüberliegenden Seiten des Kasten (46, 46') angeordnet sind und beim Einbau des Kastens (46, 46') in das Endstück (12) mit diesem in Eingriff bringbar sind, um den Kasten lösbar in seiner Position zu arretieren.

6. Teilchenabscheider nach einem der vorhergehenden Ansprüche, dadurch gekennzeichnet, daß die Teilchenrückhaltemittel jeweils einen an der stromaufwärtigen Wand (50) des Kastens (46) befestigten und um die darin befindliche öffnung (74) herum verlaufenden glockenförmig ausmündenden Ring (76) aufweisen.

7. Teilchenabscheider nach Anspruch 6, dadurch gekennzeichnet, daß der glockenförmig ausmündende Ring (76 eine etwa zylindrische äußere Mantelfläche (80 und eine in Strömungsrichtung auswärts gekrümmte innere Mantelfläche (82) aufweist, die am stromabwärtigen Ringende mit der äußeren Mantelfläche zusammenläuft.

8. Teilchenabscheider nach einem der vorhergehenden Ansprüche, dadurch gekennzeichnet, daß die Strömungsverteilermittel einen ringförmigen Diffusorring (84) aufweisen, der mit Abstand stromab der öffnung (74) angeordnet ist und sich in Strömungsrichtung nach außen erweitert, und daß der Diffusorring (84) im wesentlichen axial mit der öffnung (74) fluchtet und an seinem stromaufwärtigen Ende im Durchmesser kleiner als die öffnung (74) ist.

9. Teilchenabscheider nach Anspruch 8, dadurch gekennzeichnet, daß der Hohlkasten (46) mindestens ein Eckstück (68) aufweist, das neben der Öffnung (74) angeordnet ist und an welchem der Diffusorring (84) befestigt ist.

10. Teilchenabscheider nach einer der Ansprüche 1 bis 5, dadurch gekennzeichnet, daß die Teilchenrückhaltemittel einen zylindrischen Ring (94) aufweisen, der um die Öffnung (74') herum an der stromaufwärtigen Wand (50') befestigt ist und eine um die Öffnung herum verlaufende Lippe bildet.

11. Teilchenabscheider nach Anspruch 10, dadurch gekennzeichnet, daß die Strömungsverteilermittel (84, 96) einen an der stromabwärtigen Wand (78') des Hohlkastens (46') gegenüber der in der stromaufwärtigen Wand (50') gelildeten Öffnung (74') befestigten kopfstehenden Kegel (96) aufweisen.

12. Teilchenabscheider nach Anspruch 11, dadurch gekennzeichnet, daß der Kegel (96) einen maximalen Durchmesser hat, der kleiner als der Durchmesser der Öffnung (74′) ist.

13. Teilchenabscheider nach Ahspruch 10 oder 11, dadurch gekennzeichnet, daß der Kegel (96) aus dem gleichen Material wie der Kasten (46′) hergestellt ist.

14. Teilchenabscheider nach einem der vorhergehenden Ansprüche, dadurch gekennzeichnet, daß die genannten Wände (48, 50; 48′, 50′) des Hohlkastens (46; 46′) an ihren Rändern durch eine Seitenwand (52; 52′) miteinander verhunden sind, die in Strömungsrichtung einwärts geneigt ist.

## Revendications

1. Piège à débris pour capturer et retenir des débris entraînés dans l'écoulement d'un réfrigérant liquide dans un assemblage combustible nucléaire à travers des trous d'écoulement dans une plaque d'adaptation d'un embout d'extrémité de l'assemblage combustible, ce dernier comportant une grille supportant la barre combustible espacée dudit embout d'extrémité en une position en aval par rapport à cet embout, en tenant compte de la direction d'écoulement dudit liquide réfrigérant, ledit piège à débris comportant:

(a) une enceinte creuse (46, 46′) disposée de façon adjacente à ladite plaque (34) d'adaptation et en amont de cette dernière, et formée d'un matériaù qui est perméable au réfrigérant liquide et imperméable aux débris entraînés à l'intérieur, ladite enceinte creuse ayant une paire de parois (48, 50; 48′, 50′) qui s'étendent en travers du chemin d'écoulement du réfrigérant et sont espacées l'une de l'autre dans ladite direction d'écoulement et dont les parois se rejoignent à leur périphérie pour définir une chambre (54; 54′) de capture et de retenue de débris à l'intérieur de l'enceinte;

(b) des moyens définissant au moins une ouverture (74; 74′) dans la chambre (54; 54′) à travers la paroi de l'enceinte qui en est la paroi amont (50; 50′), ladite ouverture (74; 74′) étant suffisamment grande pour permettre aux débris entraînés dans le réfrigérant liquide de pénétrer dans ladite chambre (54; 54′);

(c) des moyens de retenue des débris (76; 94) disposés à l'intérieur de ladite chambre (54; 54′) autour de ladite ouverture (74; 74′) et ayant une configuration telle qu'elle empêche les débris entraînés par le réfrigérant liquide dans la chambre de ressortir de cette chambre à travers lesdites ouvertures (74; 74′); et

(d) des moyens de distribution d'écoulement (84; 96) s'étendant à l'intérieur de ladite chambre (54; 54′), espacés et disposés en aval desdits moyens (76; 94) de retenue des débris et de ladite ouverture (74; 74′), et ayant une configuration telle que le réfrigérant liquide lors de sa sortie de ladite enceinte (46; 46′) soit distribué de façon sensiblement uniforme en travers de ladite plaque (34) d'adaptation.

2. Piège à débris selon la revendication 1, caractérisé par le fait que ledit matériau constituant l'enceinte creuse (46) est une plaque perforée.

3. Piège à débris selon les revendications 1 ou 2, caractérisé par le fait que les parois aval (48) et amont (50) de l'enceinte creuse (46) sont montées entre un manchon central (72) de renforcement.

4. Piège à débris selon les revendications 1, 2 ou 3, caractérisé par le fait que ladite enceinte creuse (46; 46′) a une dimension de section transversale telle qu'elle s'adapte à l'intérieur dudit embout (12) d'extrémité, et comporte des moyens (70) de blocage pour bloquer de façon démontable l'enceinte en position à l'intérieur de l'embout d'extrémité.

5. Piège à débris selon la revendication 4, caractérisé 5 par le fait que lesdits moyens (70) de blocage comportent une paire d'attaches (70) pouvant être courbées, disposées sur les côtés opposés de ladite enceinte (46; 46′), et pouvant s'engager dans ledit embout (12) d'extrémité lors de l'installation de l'enceinte (46; 46′) à l'intérieur de celle-ci, pour bloquer de façon démontable l'enceinte dans sa position.

6. Piège à débris selon l'une quelconque des revendications précédentes, caractérisé par le fait que chacun desdits moyens de retenue de débris comprend un anneau (76) à embouchure en forme de cloche fixé à la paroi amont (50) de l'enceinte (46) et s'étendant autour de ladite ouverture (74).

7. Piège à débris selon la revendication 6, caractérisé par le fait que l'anneau (76) à embouchure en forme de cloche a une surface périphérique extérieure (80) qui est sensiblement cylindrique, et une surface périphérique intérieure (82) qui s'incurve vers l'extérieur dans ladite direction d'écoulement pour se confondre avec ladite surface périphérique extérieure (80) à leurs extrémités aval.

8. Piège à débris selon l'une quelconque des revendications précédentes, caractérisé par le fait que lesdits moyens de distribution d'écoulement comportent un anneau diffuseur circulaire (84), espacé de ladite ouverture (74) et en aval de cette dernière, et s'évasant vers l'extérieur dans ladite direction d'écoulement, ledit anneau diffuseur (84) étant sensiblement en alignement axial avec ladite ouverture (74), et ayant à son extrémité amont un diamètre plus petit que le diamètre de l'ouverture (74).

9. Piège à débris selon la revendication 8, caractérisé par le fait que ladite enceinte creuse (46) comporte au moins une pièce (68) de coin disposée de façon adjacente à ladite ouverture (74) et ayant ledit anneau diffuseur (84) fixé à cet endroit.

10. Piège à débris selon l'une quelconque des revendications 1 à 5, caractérisé par le fait que lesdits moyens de retenue de débris comportent un anneau cylindrique (94) fixé à ladite paroi amont (50′) autour de ladite ouverture (74′) et formant une lèvre autour de cette dernière.

11. Piège à débris selon la revendication 10, caractérisé par le fait que les moyens (84, 96) de distribution d'écoulement comportent un cône inversé (96) fixé à la paroi aval (48′) de ladite enceinte creuse (46'), à l'opposé de ladite ouverture (74') dans la paroi amont (50') de cette enceinte.

12. Piège à débris selon la revendication 11, caractérisé par le fait que ledit cône (96) a un diamètre maximal plus petit que le diamètre de ladite ouverture (74').

13. Piège à débris selon les revendications 10 ou 11, caractérisé par le fait que ledit cône (96) est composé du même matériau que ladite enceinte (46').

14. Piège à débris selon l'une quelconque des revendications précédentes, caractérisé par le fait que lesdites parois (48, 50; 48', 50') de l'enceinte creuse (46, 46') se rejoignent à leurs périphéries par une paroi latérale (52; 52') qui est inclinée vers l'intérieur dans la direction d'écoulement.

FIG. 1

FIG. 2

FIG. 4

FIG. 3

2

**FIG.5**

**FIG.6**